# EUROPEAN PATENT APPLICATION

(11) **EP 4 450 457 A1**
(43) Date of publication of application: **23.10.2024**
(21) Application number: 23895547.0
(22) Date of filing: 31.08.2023
(51) Int. Cl.: C01B 25/37, C01B 25/45, H01M 10/0525, H01M 4/58

(54) **HIGH-TAP-DENSITY FERRIC PHOSPHATE, PREPARATION METHOD THEREFOR, AND LITHIUM IRON PHOSPHATE**

(30) Priority: 28.02.2023 CN 202310195783
(71) Applicant: Hubei Hongrun New Materials Co., Ltd., Ezhou, Hubei 436070 (CN); Hubei Wanrun New Energy Technology Co., Ltd., Shiyan, Hubei 442500 (CN)
(72) Inventor: LIU, Shiqi, Shiyan, Hubei 442500 (CN); GUO, Miyan, Ezhou, Hubei 436070 (CN); XU, Shanwan, Ezhou, Hubei 436070 (CN); WANG, Hui, Ezhou, Hubei 436070 (CN); XU, Peng, Ezhou, Hubei 436070 (CN); WANG, Qin, Shiyan, Hubei 442500 (CN)
(74) Representative: Manitz Finsterwald Patent- und Rechtsanwaltspartnerschaft mbB
(86) International application number: PCT/CN2023/116049
(87) International publication number: WO 2024/178933

(57) **Abstract**

The present invention belongs to the field of ferric phosphate preparation, and provides high tap density ferric phosphate, a preparation method thereof, and lithium iron phosphate. The method includes following steps: (a) feeding a ferrous sulfate solution and a phosphate solution including hydrogen peroxide simultaneously into a first reactor for mixing and reacting to obtain nucleated ferric phosphate; wherein a molar ratio of iron element to phosphorus element in the feeding process is 1:1, and a stirring speed is 500-600r/min; (b) discharging the nucleated ferric phosphate to a second reactor for growth to obtain amorphous ferric phosphate slurry, and post-processing the amorphous ferric phosphate slurry to obtain the high tap density ferric phosphate; wherein a stirring speed is 120-150r/min. The first reactor is a small-volume reactor, and the second reactor is a large-volume reactor. The present invention solves the technical problems of high production cost of ferric phosphate, easy destruction of particle crystal structure, distortion of crystal lattice, and high impurity content, and achieves the technical effect of preparation of high tap density ferric phosphate at low production cost.

## Description

This application claims priority to Chinese patent application No. 202310195783.2, filed on February 28, 2023 at China National Intellectual Property Administration, and titled "HIGH TAP DENSITY FERRIC PHOSPHATE, PREPARATION METHOD THEREOF, AND LITHIUM IRON PHOSPHATE", the content of which is hereby incorporated herein in its entirety by reference.

### TECHNICAL FIELD

The present invention belongs to the field of ferric phosphate preparation, and in particular relates to high tap density ferric phosphate, a preparation method thereof, and lithium iron phosphate.

### BACKGROUND

Lithium iron phosphate, as an important cathode material for lithium-ion batteries, offering advantages such as low cost, high safety, and robust cycling performance. Ferric phosphate is the most important precursor of lithium iron phosphate, and its purity, particle size distribution, iron-to-phosphorus ratio, morphology, and tap density all profoundly influence the performance of lithium iron phosphate. In addition to continuously improving its performance, reducing the production cost is also imperative for ferric phosphate. The production cost of ferric phosphate mainly includes two factors: raw materials and power. The costs of raw materials are primarily determined by the consumed amounts of phosphoric acid and hydrogen peroxide, and the power mainly involves the consumed energy.

In the prior art, CN108455547B discloses a method for preparing battery-grade ferric phosphate with few impurities, high iron-to-phosphorus ratio, and large specific surface area. Firstly, impurities are removed from ferrous sulfate. The ferrous sulfate, hydrogen peroxide and phosphate are simultaneously added into purified water as the solvent to prepare crude ferric phosphate, which is then washed with water and added with phosphoric acid, and pH of the solution is adjusted with alkali. This process not only consumes excessive phosphoric acid but also introduces alkali, thus increasing the costs of raw materials. In addition, the introduction of ammonium ions after aging can lead to phase transformation of a second-wash filter cake, resulting in generation of ammonia odor during sintering. CN114014290B discloses a low-cost method and equipment for preparing stable ferric phosphate. Ferric phosphate slurry is prepared by continuously stirring and reacting a phosphorus source solution and an iron source solution in three serially connected reactors. This process involves three reactors with short residence times and inconsistent temperatures. The increasing stirring speed may lead to excessive stirring force, causing further refinement of the already crystallized particles, continuously destroying the crystal structure, and crystal lattice distortion, making it difficult to prepare stable products with controllable particle sizes. In addition, the high stirring speeds lead to high energy consumption. CN11847416B discloses a method for preparing hydrated ferric phosphate from a by-product of titanium dioxide, which includes ferrous sulfate, wherein the titanium dioxide by-product including ferrous sulfate is dissolved in water to remove impurities and obtain a purified solution. The ferrous solution is sequentially added with phosphate and sulfuric acid, and then added with an oxidant for oxidation, resulting in ferric phosphate slurry. The ferric phosphate slurry is then washed with water and dried to produce hydrated ferric phosphate with high purity and high tap density. This process requires a large amount of raw materials. The simultaneous addition of the iron salt and the phosphate salt may lead to the formation of iron by-products such as ferric hydroxide and ferrous phosphate. Additionally, the concurrent oxidation and precipitation by the oxidant lead to rapid nucleation and uncontrollable particle size. CN111153391B discloses a method for preparing a battery-grade ferric phosphate with low sulfur content by adding a ferric sulfate solution to a phosphate solution and heating under agitation for synthesis reaction, followed by filtration and washing. This process utilizes ferric sulfate as the iron source, which is unstable. During gradual addition of ferric sulfate to the phosphate solution, phosphate by-products may be formed as the ferric sulfate solution may include a large amount of impurities and the phosphorus is excessive. Moreover, with the addition of ferric sulfate, pH of the synthesis process fluctuates from high to low, leading to particle nucleation and growth in an unstable environment, resulting in high impurity content and significant particle size fluctuation in the prepared ferric phosphate.

In view of this, the present invention is proposed.

### SUMMARY

An object of the present invention is to provide a preparation method of high tap density ferric phosphate, which not only reduces production cost and increases the yield of ferric phosphate, but also avoids the issues of secondary nucleation of dispersed ferric phosphate particles and crystal distortion. The ferric phosphate particles can grow uniformly and form size gradation in a stable environment, thereby increasing the tap density.

Another object of the present invention is to provide high tap density ferric phosphate, having a tap density of 1.25g/cm³-1.45g/cm³ with low impurity content, which is suitable for producing lithium iron phosphate products with high compaction density and excellent electrical performance.

Yet another object of the present invention is to provide lithium iron phosphate with high compaction density and excellent electrical performance, which is suitable to be used as a cathode material of a lithium ion battery.

In order to achieve the above objects of the present invention, following technical solutions are adopted.

In a first aspect, a preparation method of high tap density ferric phosphate includes following steps:
(a) feeding a ferrous sulfate solution and a phosphate solution including hydrogen peroxide simultaneously into a first reactor for mixing and reacting to obtain nucleated ferric phosphate;
   wherein a molar ratio of iron element to phosphorus element in the feeding process is 1:1;
   wherein a stirring speed during the mixing process is 500r/min-600r/min;
(b) discharging the nucleated ferric phosphate to a second reactor for growth to obtain amorphous ferric phosphate slurry, and post-processing the amorphous ferric phosphate slurry to obtain the high tap density ferric phosphate;
   wherein a stirring speed during the growth is 120r/min-150r/min;
   wherein a volume ratio of the first reactor to the second reactor is 0.75%-1.5%.

Further, a concentration of ferrous ions in the ferrous sulfate solution is 1mol/L-1.2mol/L, and pH of the ferrous sulfate solution is 2.5-3.5.

Preferably, a concentration of phosphorus element in the phosphate solution is 1.8mol/L-2mol/L.

Preferably, a concentration of hydrogen peroxide in the phosphate solution is 1.1mol/L-1.2mol/L.

Further, raw materials for preparing the ferrous sulfate solution include a by-product of titanium dioxide.

Further, in step (a), a feeding speed of the ferrous sulfate solution is 6L/min-8L/min;

Preferably, a feeding speed of the phosphate solution is 3L/min-4L/min.

Further, after the ferrous sulfate solution and the phosphate solution comprising hydrogen peroxide are started to be fed into the first reactor for 5 seconds - 10 seconds, materials are started to be discharged to the second reactor from the first reactor.

Preferably, a volume of the first reactor is 3L.

Preferably, a volume of the second reactor is 300L.

Further, in step (b), a discharge speed of the nucleated ferric phosphate is 9L/min-12L/min.

Further, in step (b), the post-processing includes following steps:
first washing, slurry forming, aging, second washing, and calcining the amorphous ferric phosphate slurry to obtain the high tap density ferric phosphate.

In a second aspect, high tap density ferric phosphate is prepared by any one of the above preparation methods.

Further, the tap density of the ferric phosphate is 1.25g/cm³-1.45g/cm³.

In a third aspect, lithium iron phosphate is mainly prepared from the high tap density ferric phosphate described above and lithium carbonate.

Compared with the prior art, the present invention at least provides following beneficial effects:
In the preparation method of high tap density ferric phosphate provided by the present invention, the iron salt solution and the phosphate solution including hydrogen peroxide are simultaneously fed into the small-volume reactor according to a Fe:P molar ratio of 1:1, and stirred at a specific high stirring speed to rapidly uniformly mix the materials. During this process, hydrogen peroxide in the phosphate solution can rapidly oxidize ferrous irons to ferric irons. The ferric irons then combine with phosphate ions to form precipitated ferric phosphate. Under the high-speed mixing, rapid nucleation of ferric phosphate can be achieved, minimizing the decomposition amount of hydrogen peroxide, minimizing unreacted Fe and P amounts in the first-wash solution, and maximizing the yield of ferric phosphate. As the amount of the by-product iron hydroxide is minimized, the amount of hydrogen peroxide and the consumption of phosphoric acid are minimized, so that the costs of raw materials are minimized. The nucleated ferric phosphate is transported to the large-volume reactor for growth, where dispersion and secondary nucleation of the already nucleated particles can be avoided due to the gentle stirring at a specific stirring speed - if the stirring speed is over high, the intense stirring will easily cause further refinement of the already crystallized particles, continuous destroying of the crystal structure, and distortion of crystal lattice, resulting in difficulties in preparing products with controllable particle sizes and complete crystal structures, and the high stirring speed will lead to high energy consumption. As the materials in the small-volume reactor are continuously input into the large-volume reactor, the environmental pH in the large-volume reactor tends to be stable, so that the materials can grow orderly in a stable environment. With the extension of time, the large and small particles form a gradation, the particles are uniform and dense, the grain boundaries between particles are clear, and the tap density of the ferric phosphate material is increased. Therefore, the preparation method provided by the present invention achieves synergistic effect by the processing steps and parameters thereof, achieving the goal of low-cost production of high tap density (high quality) ferric phosphate.

The high tap density ferric phosphate provided by the present invention can have a tap density of 1.25g/cm³-1.45g/cm³ with low impurity content, and is suitable for producing lithium iron phosphate products with high compaction density and excellent electrical performance.

The lithium iron phosphate provided by the present invention has high compaction density and excellent electrical performance, and is suitable for being used as a cathode material for lithium ion batteries.

### BRIEF DESCRIPTION OF THE DRAWINGS

In order to more clearly describe the embodiments of the present application, the accompanying drawings to be used in the description of the embodiments or prior art will be described briefly. Obviously, the drawings described below are only for some embodiments of the present application. For ordinary skilled persons in the art, other drawings can also be obtained based on the following drawings without creative work.
FIG. 1 is a scanning electron microscopic (SEM) image of ferric phosphate of Example 1 obtained in Test Example 1 of the present invention.
FIG. 2 is a SEM image of ferric phosphate of Example 2 obtained in Test Example 1 of the present invention.
FIG. 3 is a SEM image of ferric phosphate of Example 3 obtained in Test Example 1 of the present invention.
FIG. 4 is an SEM image of ferric phosphate of Comparative Example 1 obtained in Test Example 1 of the present invention.
FIG. 5 is an SEM image of ferric phosphate of Comparative Example 2 obtained in Test Example 1 of the present invention.
FIG. 6 is an SEM image of ferric phosphate of Comparative Example 3 obtained in Test Example 1 of the present invention.
FIG. 7 is an SEM image of ferric phosphate of Comparative Example 7 obtained in Test Example 1 of the present invention.
FIG. 8 is an SEM image of ferric phosphate of Comparative Example 9 obtained in Test Example 1 of the present invention.

### DETAILED DESCRIPTION

The following will clearly and completely describe the technical solutions of the present invention with reference to the embodiments. It can be understood by the skilled in the art that the described embodiments are merely some rather than all of the embodiments of the present invention. All other embodiments obtained by a person of ordinary skill in the art based on the embodiments of the present invention without making creative efforts shall fall within the protection scope of the present invention.

According to a first aspect of the present invention, a preparation method of high tap density ferric phosphate is provided, which includes following steps:
(a) feeding a ferrous sulfate solution and a phosphate solution including hydrogen peroxide simultaneously into a first reactor for mixing and reacting to obtain nucleated ferric phosphate;
   wherein a molar ratio of iron element to phosphorus element in the feeding process can be but is not limited to 1:1; a stirring speed during the mixing process can be but is not limited to 500r/min-600r/min, and for example can be but is not limited to 500r/min, 520r/min, 540r/min, 560r/min, 580r/min, 600r/min;
(b) discharging the nucleated ferric phosphate to a second reactor for growth to obtain amorphous ferric phosphate slurry, and post-processing the amorphous ferric phosphate slurry to obtain the high tap density ferric phosphate;
   wherein a stirring speed during the growth is 120r/min-150r/min, and for example can be but is not limited to 120r/min, 130r/min, 140r/min, 150r/min;
   wherein a volume ratio of the first reactor to the second reactor is 0.75%-1.5%.

In the preparation method provided by the present invention, the iron salt solution and the phosphate solution including hydrogen peroxide are simultaneously fed into the small-volume reactor with a specific stirring speed (high speed) according to a Fe:P molar ratio of 1:1 for oxidation and nucleation. In the small-volume reactor with the specific stirring speed, decomposition of hydrogen peroxide and formation of iron by-products can be avoided, thus reducing the amount of hydrogen peroxide and reducing the amount of phosphoric acid consumed in the subsequent aging process, maximizing the yield of ferric phosphate formed from iron and phosphorus, and minimizing the amounts and costs of the raw materials. The nucleated ferric phosphate formed in the small-volume reactor is then transported to the large-volume reactor, and gently stirred at a specific stirring speed (low speed), avoiding dispersion and secondary nucleation of the primary particles and crystal lattice distortion due to intense stirring, and ensuring that the ferric phosphate particles can grow uniformly at a relatively stable pH value. Therefore, the ferric phosphate particles gradually flow from the small-volume reactor into the large-volume reactor, and with the extension of time, the large and small particles form a gradation, the particles are uniform and dense, and the grain boundaries between particles are clear, which increases the tap density of the material.

In a preferred embodiment, a concentration of ferrous ions in the ferrous sulfate solution can be 1 mol/L -1.2 mol/L, and for example, can be but is not limited to 1 mol/L, 1.1 mol/L, 1.2 mol/L; pH of the ferrous sulfate solution can be 2.5-3.5, and for example, can be but is not limited to 2.5, 3, or 3.5.

In the present invention, raw materials for preparing the ferrous sulfate solution include but are not limited to a by-product of titanium dioxide.

In the present invention, the preparation method of the ferrous sulfate solution includes following steps:
1. dissolving a by-product of titanium dioxide including ferrous sulfate in water, adding a small amount of phosphoric acid, and then adjusting the pH to 4-5 by adding alkali; filtering under pressure, and settling until the turbidity is less than 50 NTU to obtain a solution;
2. diluting the solution obtained in step 1 with water until the concentration of ferrous ions reaches 1 mol/L and the pH reaches 2.5-3.5 at a temperature of 30°C-40°C, to obtain the ferrous sulfate solution used in the present invention.

In a preferred embodiment, a concentration of phosphorus in the phosphate solution can be 1.8mol/L-2mol/L, and for example, can be but is not limited to 1.8mol/L, 1.9mol/L, 2mol/L; a concentration of hydrogen peroxide in the phosphate solution can be 1.1mol/L-1.2mol/L, and for example, can be but is not limited to 1.1mol/L, 1.12mol/L, 1.14mol/L, 1.16mol/L, 1.18mol/L, or 1.2mol/L.

In a preferred embodiment, in step (a), a feeding speed of the ferrous sulfate solution can be 6L/min-8L/min, and for example, can be but is not limited to 6L/min, 6.5L/min, 7L/min, 7.5L/min, 8L/min; a feeding speed of the phosphate solution can be 3L/min-4L/min, and for example, can be but is not limited to 3L/min, 3.2L/min, 3.4L/min, 3.6L/min, 3.8L /min, 4L/min.

The feeding speed of the ferrous sulfate solution and the feeding speed of the phosphate solution selected by the present invention are more conducive to improving the oxidation and nucleation of the reactants and improving the yield of ferric phosphate.

In a preferred embodiment, after the ferrous sulfate solution and the phosphate solution comprising hydrogen peroxide are started to be fed into the first reactor for 5 seconds - 10 seconds, materials starts to be discharged to the second reactor from the first reactor, wherein a volume of the first reactor can be 3L, and a volume of the second reactor can be 300L. The synergistic cooperation of the processing steps and parameters thereof is conducive to further reducing production cost and further increasing the tap density of ferric phosphate.

In a preferred embodiment, in step (b), a discharge speed of the nucleated ferric phosphate can be 9L/min-12L/min, and for example, can be but is not limited to 9L/min, 10L/min, 11 L/min, 12L/min, which is more conducive to achieving a synergistic effect with other process parameters in the present invention to further increase the tap density of ferric phosphate.

In a preferred embodiment, in step (b), the post-processing includes following steps:

first washing, slurry forming, aging, second washing, and calcining the amorphous ferric phosphate slurry to obtain the high tap density ferric phosphate.

In a preferred embodiment, the post-processing of the present invention includes following steps:
The amorphous ferric phosphate slurry is filtered under pressure and washed until the conductivity reaches 3 mS/cm -5 mS/cm. Subsequently, water is added to the slurry (solid content: 20%-30%) and phosphoric acid with an iron molar concentration of 5%-10% is added. The mixture is stirred evenly, heated to 90°C-95°C, and maintained for 60 minutes -90 minutes after the iron phosphate material in the aging kettle changes color. Then, the materials are filtered under pressure and washed until the conductivity reaches 200 µs/cm, then dried and calcined, to obtain the high tap density ferric phosphate.

The post-processing steps and process parameters of the present invention are more conducive to obtaining high-quality ferric phosphate products and are suitable for being used as a raw material for preparing lithium iron phosphate.

A typical preparation method of high tap density ferric phosphate includes following steps:
1. dissolving a by-product of titanium dioxide including ferrous sulfate in water, adding a small amount of phosphoric acid, and then adjusting the pH of the system to 4-5 by adding alkali; filtering under pressure, and settling until the turbidity is less than 50 NTU to obtain solution A for later use;
2. diluting the solution obtained in step 1 with water until the concentration of ferrous ions reaches 1 mol/L and the pH reaches 2.5-3.5 at a temperature of 30°C-40°C, to obtain reaction solution A (ferrous sulfate solution);
3. dissolving a phosphate in water, and adjusting the pH of the system to 7-7.5 by adding alkali to obtain solution B;
4. diluting the solution B obtained in step 3 with water until a concentration of phosphorus element is 2mol/L, adding hydrogen peroxide until a concentration of 1.1mol/L-1.2mol/L, and reacting at a temperature of 30°C-40°C to obtain reaction solution B (phosphate solution including hydrogen peroxide);
5. feeding the reaction solution A at a speed of 6L/min-8L/min and the reaction solution B at a speed of 3L/min-4L/min into a 3L reactor (first reactor) simultaneously, maintaining a Fe:P molar ratio at 1:1 during the feeding process and maintaining the stirring speed of the first reactor at 500r/min-600r/min to obtain nucleated ferric phosphate;
   wherein after the reaction solution A and the reaction solution B are started to be fed into the first reactor, and the discharge speed is 9L/min-12L/min for 5 seconds -10 seconds, the materials are started to be discharged to a 300L reactor (second reactor) for growth from the bottom of the first reactor;
6. maintaining the stirring speed of the second reactor during discharging the materials to the second reactor at 120r/min-150r/min; when the volume of the materials in the second reactor reaches 240L-255L, terminating the material input while stirring and reacting for 10 minutes -20 minutes to obtain amorphous ferric phosphate slurry;
7. filtering under pressure and washing the amorphous ferric phosphate slurry (first washing) until the conductivity reaches 3-5ms/cm to obtain a first washed material;
8. adding water to the first washed material in an aging kettle to obtain a slurry with a solid content of 20%-30%; adding phosphoric acid with an iron molar concentration of 5%-10%, stirring evenly and heating to 90°C-95°C;
9. maintaining the temperature for 60 minutes -90 minutes after the material in the aging kettle changes color, and then filtering the material under pressure (second washing) until the conductivity reaches 200 µS/cm to obtain a second washed material;
10. drying and calcining the second washed material to obtain the high tap density ferric phosphate.

The preparation method provided by the present invention can produce high-quality ferric phosphate at low cost and is suitable for producing lithium iron phosphate products with high compaction density and excellent electrical performance to enhance the core competitiveness of enterprises.

According to a second aspect of the present invention, a high tap density ferric phosphate prepared by any one of the above preparation methods is provided, which can have a tap density reaching 1.25g/cm³-1.45g/cm³ and a low impurity content, and is suitable for producing lithium iron phosphate products with high compaction density and excellent electrical performance.

According to a second aspect of the present invention, lithium iron phosphate is provided, which is mainly prepared from the high tap density ferric phosphate and lithium carbonate.

The lithium iron phosphate provided by the present invention has high compaction density and excellent electrical performance, and is suitable for being used as a cathode material for lithium ion batteries.

The present invention will be further described below in examples. Unless otherwise specified, the materials in the examples were prepared according to existing methods or purchased directly from the market.

### Example 1

A preparation method of high tap density ferric phosphate includes the following steps:
1. dissolving a by-product of titanium dioxide including ferrous sulfate in water, adding a small amount of phosphoric acid, and then adjusting the pH of the system to 4.5 by adding alkali; filtering under pressure, and settling until the turbidity is less than 50 NTU to obtain solution A for later use;
2. diluting the solution A obtained in step 1 with water until the concentration of ferrous ions reaches 1 mol/L and the pH reaches 2.5 at a temperature of 30°C, to obtain reaction solution A (ferrous sulfate solution);
3. dissolving a phosphate in water, and adjusting the pH of the system to 7 by adding alkali to obtain solution B;
4. diluting the solution B obtained in step 3 with water until a concentration of phosphorus element is 2mol/L, adding hydrogen peroxide until a concentration of 1.15mol/L, and reacting at a temperature of 35°C to obtain reaction solution B (phosphate solution including hydrogen peroxide);
5. feeding the reaction solution A at a speed of 7L/min and the reaction solution B at a speed of 3.5L/min into a 3L reactor (first reactor) simultaneously, maintaining a Fe:P molar ratio at 1:1 during the feeding process and maintaining the stirring speed of the first reactor at 550r/min to obtain nucleated ferric phosphate;
   wherein after the reaction solution A and the reaction solution B are started to be fed into the first reactor for 8 seconds, the materials are started to be discharged to a 300L reactor (second reactor) for growth from the bottom of the first reactor, and the discharge speed is 10.5L/min;
6. maintaining the stirring speed of the second reactor during discharging the materials to the second reactor at 135r/min; when the volume of the materials in the second reactor reaches 245L, terminating the material input while stirring and reacting for 15 minutes to obtain amorphous ferric phosphate slurry;
7. filtering under pressure and washing the amorphous ferric phosphate slurry (first washing) until the conductivity reaches 3ms/cm to obtain a first washed material;
8. adding water to the first washed material in an aging kettle to obtain a slurry with a solid content of 25%; adding phosphoric acid with an iron molar concentration of 7.5%, stirring evenly and heating to 93°C;
9. maintaining the temperature for 75 minutes after the material in the aging kettle changes color, and then filtering the material under pressure (second washing) until the conductivity reaches 200 µS/cm to obtain a second washed material;
10. drying and calcining the second washed material to obtain the high tap density ferric phosphate.

### Example 2

A preparation method of high tap density ferric phosphate includes the following steps:
1. dissolving a by-product of titanium dioxide including ferrous sulfate in water, adding a small amount of phosphoric acid, and then adjusting the pH of the system to 4 by adding alkali; filtering under pressure, and settling until the turbidity is less than 50 NTU to obtain solution A for later use;
2. diluting the solution A obtained in step 1 with water until the concentration of ferrous ions reaches 1 mol/L and the pH reaches 3.5 at a temperature of 35°C, to obtain reaction solution A (ferrous sulfate solution);
3. dissolving a phosphate in water, and adjusting the pH of the system to 7 by adding alkali to obtain solution B;
4. diluting the solution B obtained in step 3 with water until a concentration of phosphorus element is 2mol/L, adding hydrogen peroxide until a concentration of 1.1mol/L, and reacting at a temperature of 30°C to obtain reaction solution B (phosphate solution including hydrogen peroxide);
5. feeding the reaction solution A at a speed of 6L/min and the reaction solution B at a speed of 3L/min into a 3L reactor (first reactor) simultaneously, maintaining a Fe:P molar ratio at 1:1 during the feeding process and maintaining the stirring speed of the first reactor at 500r/min to obtain nucleated ferric phosphate;
   wherein after the reaction solution A and the reaction solution B are started to be fed into the first reactor for 5 seconds, the materials are started to be discharged to a 300L reactor (second reactor) for growth from the bottom of the first reactor, and the discharge speed is 9L/min;
6. maintaining the stirring speed of the second reactor during discharging the materials to the second reactor at 120r/min; when the volume of the materials in the second reactor reaches 240L, terminating the material input while stirring and reacting for 10 minutes to obtain amorphous ferric phosphate slurry;
7. filtering under pressure and washing the amorphous ferric phosphate slurry (first washing) until the conductivity reaches 4ms/cm to obtain a first washed material;
8. adding water to the first washed material in an aging kettle to obtain a slurry with a solid content of 20%; adding phosphoric acid with an iron molar concentration of 5%, stirring evenly and heating to 90°C;
9. maintaining the temperature for 60 minutes after the material in the aging kettle changes color, and then filtering the material under pressure (second washing) until the conductivity reaches 200 µS/cm to obtain a second washed material;
10. drying and calcining the second washed material to obtain the high tap density ferric phosphate.

### Example 3

A preparation method of high tap density ferric phosphate includes the following steps:
1. dissolving a by-product of titanium dioxide including ferrous sulfate in water, adding a small amount of phosphoric acid, and then adjusting the pH of the system to 5 by adding alkali; filtering under pressure, and settling until the turbidity is less than 50 NTU to obtain solution A for later use;
2. diluting the solution A obtained in step 1 with water until the concentration of ferrous ions reaches 1 mol/L and the pH reaches 3 at a temperature of 40°C, to obtain reaction solution A (ferrous sulfate solution);
3. dissolving a phosphate in water, and adjusting the pH of the system to 7.5 by adding alkali to obtain solution B;
4. diluting the solution B obtained in step 3 with water until a concentration of phosphorus element is 2mol/L, adding hydrogen peroxide until a concentration of 1.2mol/L, and reacting at a temperature of 40°C to obtain reaction solution B (phosphate solution including hydrogen peroxide);
5. feeding the reaction solution A at a speed of 8L/min and the reaction solution B at a speed of 4L/min into a 3L reactor (first reactor) simultaneously, maintaining a Fe:P molar ratio at 1:1 during the feeding process and maintaining the stirring speed of the first reactor at 600r/min to obtain nucleated ferric phosphate;
   wherein after the reaction solution A and the reaction solution B are started to be fed into the first reactor for 10 seconds, the materials are started to be discharged to a 300L reactor (second reactor) for growth from the bottom of the first reactor, and the discharge speed is 12L/min;
6. maintaining the stirring speed of the second reactor during discharging the materials to the second reactor at 150r/min; when the volume of the materials in the second reactor reaches 255L, terminating the material input while stirring and reacting for 20 minutes to obtain amorphous ferric phosphate slurry;
7. filtering under pressure and washing the amorphous ferric phosphate slurry (first washing) until the conductivity reaches 5ms/cm to obtain a first washed material;
8. adding water to the first washed material in an aging kettle to obtain a slurry with a solid content of 30%; adding phosphoric acid with an iron molar concentration of 10%, stirring evenly and heating to 95°C;
9. maintaining the temperature for 90 minutes after the material in the aging kettle changes color, and then filtering the material under pressure (second washing) until the conductivity reaches 200 µS/cm to obtain a second washed material;
10. drying and calcining the second washed material to obtain the high tap density ferric phosphate.

### Example 4

A lithium iron phosphate in which preparation method includes the following steps:
1. mixing the ferric phosphate prepared in Example 1 and lithium carbonate at a molar ratio of 1.02, simultaneously adding glucose (the amount of glucose accounts for 13 wt%), adding purified water, and preparing a slurry with a solid content of 38%;
2. coarsely grinding the slurry obtained in step 1 in a ball mill, wherein the ball milling time is about 1-2h, the particle size D50 is controlled to be about 1-2µm, to obtain the coarsely ground slurry;
3. transporting the coarsely ground slurry obtained in step 2 to a sand mill for finely grinding, wherein the fine grinding time is about 2-3h, the particle size D50 is controlled to about 300-400nm, to obtain a finely ground slurry;
4. spray-dried and granulating the finely ground slurry obtained in step 3, wherein the spray process parameters including an inlet air temperature of 265°C and a sprayed particle size D50 of about 3-5 µm, to obtain a sprayed material;
5. loading the sprayed material obtained in step 4 into a graphite crucible, the material filling 85% of the volume of the crucible; sintering in a nitrogen atmosphere for 11 hours with a holding temperature of 770°C, to obtain a sintered material;
6. pulverizing the sintered material obtained in step 5 with dried and heated nitrogen flow, wherein the pulverized particle size D50 is controlled between 0.8 and 1.5, to obtain lithium iron phosphate.

### Example 5

The difference between this example and Example 4 is that the ferric phosphate adopted in this example is the ferric phosphate provided in Example 2, and the rest are the same as in Example 4 to obtain lithium iron phosphate.

### Example 6

The difference between this example and Example 4 is that the ferric phosphate adopted in this example is the ferric phosphate provided in Example 3, and the rest are the same as in Example 4 to obtain lithium iron phosphate.

### Comparative Example 1

A preparation method of ferric phosphate includes the following steps:
1. dissolving a by-product of titanium dioxide including ferrous sulfate in water, adding a small amount of phosphoric acid, and then adjusting the pH of the system to 5 by adding alkali; filtering under pressure, and settling until the turbidity is less than 50 NTU to obtain solution A for later use;
2. diluting the solution A obtained in step 1 with water until the concentration of ferrous ions reaches 1 mol/L and the pH reaches 3 at a temperature of 35°C, to obtain reaction solution A;
3. dissolving a phosphate in water, and adjusting the pH of the system to 7.2 by adding alkali to obtain solution B;
4. diluting the solution B obtained in step 3 with water until a concentration of phosphorus element is 2mol/L, adding hydrogen peroxide until a concentration of 1.15mol/L, and reacting at a temperature of 35°C to obtain reaction solution B;
5. feeding the reaction solution A at a speed of 8L/min and the reaction solution B at a speed of 4L/min into a 300L reactor simultaneously, maintaining a Fe:P molar ratio at 1:1 during the feeding process and maintaining the stirring speed of the reactor at 135r/min, terminating the material feeding until the volume of the materials in the reactor reaches 255L, continuing the reaction for 20 minutes, to obtain amorphous ferric phosphate slurry;
6. filtering under pressure and washing the amorphous ferric phosphate slurry until the conductivity reaches 5ms/cm;
7. adding water to the washed material to obtain a slurry with a solid content of 30%; adding phosphoric acid with an iron molar concentration of 10%, stirring evenly and heating to 93°C;
8. maintaining the temperature for 90 minutes after the material in the aging kettle changes color, and then filtering the material under pressure and washing until the conductivity reaches 200 µS/cm;
9. drying and calcining the washed material to obtain the ferric phosphate.

### Comparative Example 2

A preparation method of ferric phosphate includes the following steps:
1. dissolving a by-product of titanium dioxide including ferrous sulfate in water, adding a small amount of phosphoric acid, and then adjusting the pH of the system to 5 by adding alkali; filtering under pressure, and settling until the turbidity is less than 50 NTU to obtain solution A for later use;
2. diluting the solution A obtained in step 1 with water until the concentration of ferrous ions reaches 1 mol/L and the pH reaches 3 at a temperature of 35°C, to obtain reaction solution A;
3. dissolving a phosphate in water, and adjusting the pH of the system to 7.2 by adding alkali to obtain solution B;
4. diluting the solution B obtained in step 3 with water until a concentration of phosphorus element is 2mol/L, adding hydrogen peroxide until a concentration of 1.15mol/L, and reacting at a temperature of 35°C to obtain reaction solution B;
5. feeding all reaction solution A (160L) at the same time into a 300L reactor, while feeding the reaction solution B at a speed of 4L/min into the reactor (the feeding time is 20 minutes), ensuring that a Fe:P molar ratio is 1:1 when the feeding process is completed, and maintaining the stirring speed of the reactor at 135r/min, continuing the reaction for 20 minutes after the feeding of the reaction solution B is completed, to obtain amorphous ferric phosphate slurry;
6. filtering under pressure and washing the amorphous ferric phosphate slurry until the conductivity reaches 5ms/cm;
7. adding water to the washed material to obtain a slurry with a solid content of 30%; adding phosphoric acid with an iron molar concentration of 10%, stirring evenly and heating to 93°C;
8. maintaining the temperature for 90 minutes after the material in the aging kettle changes color, and then filtering the material under pressure and washing until the conductivity reaches 200 µS/cm;
9. drying and calcining the washed material to obtain the ferric phosphate.

### Comparative Example 3

A preparation method of ferric phosphate includes the following steps:
1. dissolving a by-product of titanium dioxide including ferrous sulfate in water, adding a small amount of phosphoric acid, and then adjusting the pH of the system to 5 by adding alkali; filtering under pressure, and settling until the turbidity is less than 50 NTU to obtain solution A for later use;
2. diluting the solution A obtained in step 1 with water until the concentration of ferrous ions reaches 1 mol/L and the pH reaches 3 at a temperature of 35°C, to obtain reaction solution A;
3. dissolving a phosphate in water, and adjusting the pH of the system to 7.2 by adding alkali to obtain solution B;
4. diluting the solution B obtained in step 3 with water until a concentration of phosphorus element is 2mol/L, adding hydrogen peroxide until a concentration of 1.15mol/L, and reacting at a temperature of 35°C to obtain reaction solution B;
5. feeding all reaction solution B (80L) at the same time into a 300L reactor, while feeding the reaction solution A at a speed of 8L/min into the reactor (the feeding time is 20 minutes), ensuring that a Fe:P molar ratio is 1:1 when the feeding process is completed, and maintaining the stirring speed of the reactor at 135r/min, continuing the reaction for 20 minutes after the feeding of the reaction solution A is completed, to obtain amorphous ferric phosphate slurry;
6. filtering under pressure and washing the amorphous ferric phosphate slurry until the conductivity reaches 5ms/cm;
7. adding water to the washed material to obtain a slurry with a solid content of 30%; adding phosphoric acid with an iron molar concentration of 10%, stirring evenly and heating to 93°C;
8. maintaining the temperature for 90 minutes after the material in the aging kettle changes color, and then filtering the material under pressure and washing until the conductivity reaches 200 µS/cm;
9. drying and calcining the washed material to obtain the ferric phosphate.

### Comparative Example 4

The difference between this comparative example and Example 4 is that the ferric phosphate adopted in this comparative example is the ferric phosphate provided in Comparative Example 1, and the rest are the same as in Example 4 to obtain lithium iron phosphate.

### Comparative Example 5

The difference between this comparative example and Example 4 is that the ferric phosphate adopted in this comparative example is the ferric phosphate provided in Comparative Example 2, and the rest are the same as in Example 4 to obtain lithium iron phosphate.

### Comparative Example 6

The difference between this comparative example and Example 4 is that the ferric phosphate adopted in this comparative example is the ferric phosphate provided in Comparative Example 3, and the rest are the same as in Example 4 to obtain lithium iron phosphate.

### Comparative Example 7

The difference between this comparative example and Example 1 is that the stirring speed of the first reactor in step 5 of this comparative example is 650 r/min, and the rest are the same as in Example 1 to obtain ferric phosphate. The drawback lies in that the ferric phosphate undergoes primary nucleation in the synthesis process, during which intense stirring can easily lead to further refinement of the already crystallized particles, continuously destroying the crystal structure and distorting the crystal lattice, making it difficult to prepare a product with controllable particle size and complete crystal structure. Moreover, the product exhibits significant particle size fluctuation, and the grain boundaries of the particles are not clearly defined.

### Comparative Example 8

The difference between this comparative example and Example 1 is that the stirring speed of the first reactor in step 5 of this comparative example is 450 r/min, and the rest are the same as in Example 1 to obtain ferric phosphate. The drawback lies in that as the phosphate incudes hydrogen peroxide, the oxidation and nucleation occur instantaneously, while the stirring is relatively slow, and the contact between phosphorus and ferric irons is insufficient, resulting in generation of iron hydroxide by-products. The aging process requires more phosphoric acid to make the material undergo crystal transformation.

### Comparative Example 9

The difference between this comparative example and Example 1 is that the stirring speed of the second reactor in step 6 of this comparative example is 200 r/min, and the rest are the same as in Example 1 to obtain ferric phosphate. The drawback lies in that the intense stirring can easily lead to further refinement of the already crystallized particles, continuously destroying the crystal structure and distorting the crystal lattice, making it difficult to prepare a product with controllable particle size and complete crystal structure. Moreover, the product exhibits significant particle size fluctuation, and the grain boundaries of the particles are not clearly defined. Furthermore, the energy consumption is increased, resulting in increased power cost.

### Comparative Example 10

The difference between this comparative example and Example 1 is that the stirring speed of the second reactor in step 6 of this comparative example is 100 r/min, and the rest are the same as in Example 1 to obtain ferric phosphate. The drawback lies in that, as the stirring speed is too low, the material is easy to sink with poor dispersion, causing stratification phenomenon and significant particle size fluctuation.

### Comparative Example 11

The difference between this comparative example and Example 4 is that the ferric phosphate adopted in this comparative example is the ferric phosphate provided in Comparative Example 7, and the rest are the same as in Example 4 to obtain lithium iron phosphate.

### Comparative Example 12

The difference between this comparative example and Example 4 is that the ferric phosphate adopted in this comparative example is the ferric phosphate provided in Comparative Example 8, and the rest are the same as in Example 4 to obtain lithium iron phosphate.

### Comparative Example 13

The difference between this comparative example and Example 4 is that the ferric phosphate adopted in this comparative example is the ferric phosphate provided in Comparative Example 9, and the rest are the same as in Example 4 to obtain lithium iron phosphate.

### Comparative Example 14

The difference between this comparative example and Example 4 is that the ferric phosphate adopted in this comparative example is the ferric phosphate provided in Comparative Example 10, and the rest are the same as in Example 4 to obtain lithium iron phosphate.

### Test Example 1

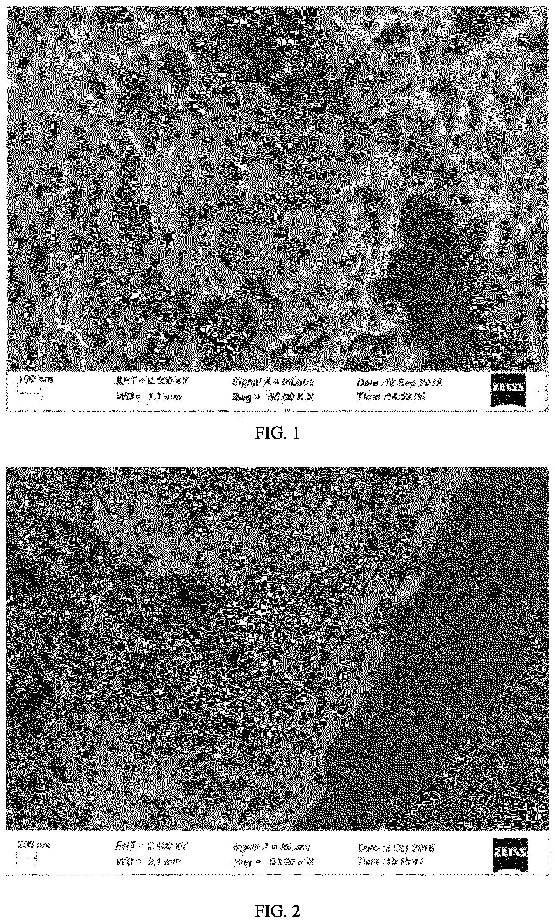

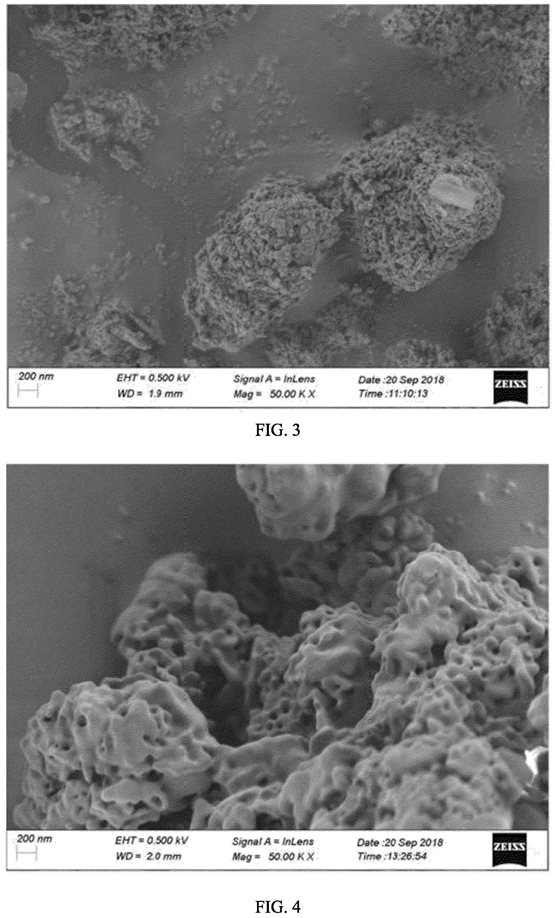

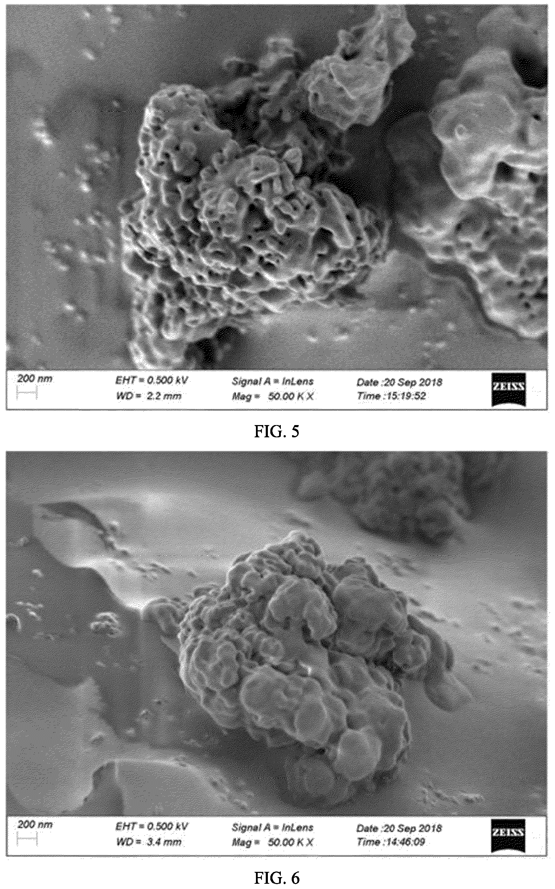

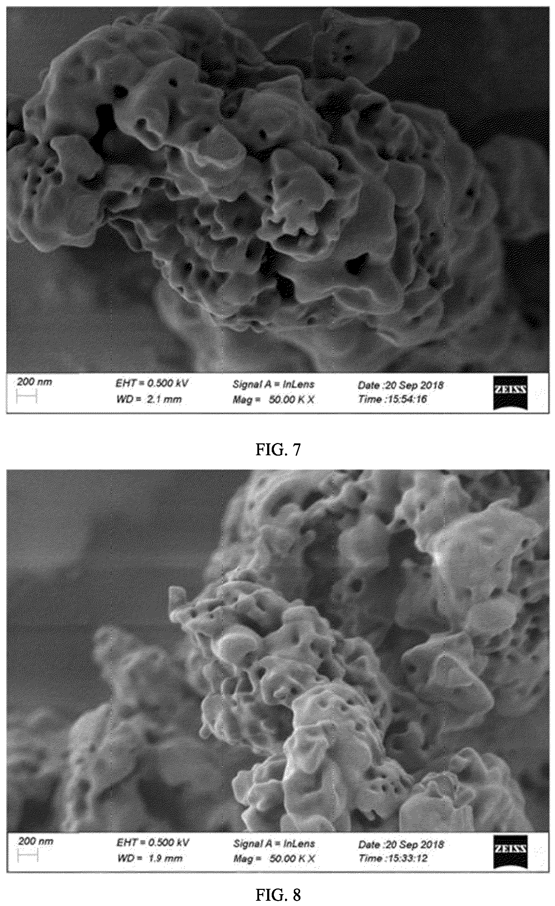

The ferric phosphate provided in Examples 1-3, Comparative Examples 1-3, Comparative Example 7, and Comparative Example 9 is characterized by scanning electron microscopy (SEM) to obtain SEM images. The SEM images of the ferric phosphate in Examples 1-3 are shown in FIGs. 1, 2 and 3 respectively. The SEM images of the ferric phosphate of Comparative Examples 1-3, Comparative Example 7, and Comparative Example 9 are shown in FIGs. 4, 5, 6, 7 and 8 respectively. It can be seen from the SEM images that the particles of the ferric phosphate provided in Examples 1-3 are uniform and dense, and the grain boundaries between particles are clear. This is attributed to the relatively small pH fluctuation during the reaction process, the high stirring speed for the oxidation and nucleation in the small-volume reactor, and the low stirring speed for the growth in the large-volume reactor. The ferric phosphate provided in Comparative Examples 1-3 exhibits uneven particle sizes, unclear grain boundaries, and significant aggregation, which are attributed to the relatively large pH fluctuation during the reaction process and the uncontrolled environment for the oxidation, nucleation, and growth. The ferric phosphate particles provided in Comparative Examples 7 and 9 show blurred grain boundaries and significant fluctuation in particle distribution, which are mainly due to the intense stirring, causing continuous dispersion and aggregation of particles and disruption of the crystal structure.

### Test Example 2

The variation of pH value during the preparation process of Examples 1-3 and Comparative Examples 1-3 is shown in Table 1.

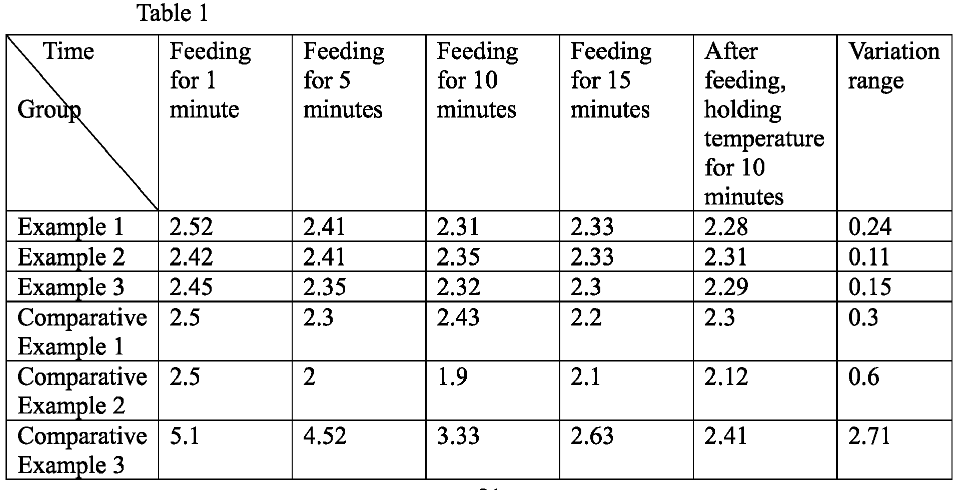

Under the condition of a certain pH value, the supersaturation degree of ferric phosphate is relatively stable. A higher pH leads to greater supersaturation degree, making it easier for nucleation and subsequent growth to occur in large quantities, resulting in uneven and fluctuating particle growth. It can be seen from the data in Table 1 that in Examples 1-3 and Comparative Example 1, the pH during the synthesis process remains relatively stable when the iron salt solution and the phosphate solution are added, which is conducive to nucleation and growth of particles. However, the addition of the phosphate solution to the iron salt solution in Comparison Example 2 and the addition of iron salt solution to the phosphate solution in Comparison Example 3 both result in significant pH fluctuations during the synthesis process, which is unfavorable for nucleation and growth of particles.

The variations of Fe and P contents in the first-wash solution and the second-wash solution after the synthesis process in Examples 1-3, Comparative Examples 1-3, and Comparative Example 8 are shown in Table 2.

**Table 2**

| Group | E1 | E2 | E3 | CE 1 | CE 2 | CE 3 | CE 8 |
|---|---|---|---|---|---|---|---|
| Fe in first-wash solution (ppm) | 58.91 | 66.93 | 24.74 | 163.23 | 221.59 | 526.91 | 43.65 |
| Pin second-wash solution (ppm) | 100.44 | 79.07 | 57.18 | 160.6 | 242.33 | 284.8 | 332.22 |

In the table, "E" stands for "Example"; "CE" stands for "Comparative Example".

The molar ratio of Fe and P during the synthesis process is set to 1:1. The contents of Fe and P in the first wash solution reflect the reaction degree of the synthesis process. It can be seen from the data in Table 2 that the contents of Fe and P in the first-wash solutions of Examples 1-3 are all within 100 ppm, indicating high reaction rates. The contents of Fe and P in the first-wash solutions of Comparative Example 1 and Comparative Example 2 are both higher than those in the examples, indicating that the one-step method may lead to significant pH fluctuations during the synthesis process, and the slow stirring speed during the oxidation process results in decomposition of a small amount of hydrogen peroxide and generation of by-products of phosphorus salts and iron salts. The contents of Fe and P in the first-wash solution of Comparative Example 3 are both high, and the content of Fe is much higher than that of P, which may be attributed the high impurity content in the iron salt, resulting in the generation of a large amount of phosphates such as manganese phosphate and ammonium magnesium phosphate when phosphorus is sufficient upon addition to the iron salt, and the high pH may also lead to the formation of colloidal iron hydroxide. In Comparative Example 8, the content of Fe is lower while P is higher in the first-wash solution, possibly due to the low stirring speed causing incomplete contact between phosphorus and iron for forming iron phosphate precipitate, and partial oxidized ferric ions forming colloidal ferric hydroxide, leading to excess phosphorus.

The particle sizes of the synthesized slurries and the final ferric phosphate of Examples 1-3, Comparative Examples 1-3, and Comparative Examples 7-10 are shown in Table 3.

**Table 3**

| Name | Particle size of synthesized slurry | | | | Particle size of ferric phosphate | | | |
|---|---|---|---|---|---|---|---|---|
| | D10 | D50 | D90 | D100 | D10 | D50 | D90 | D100 |
| Example 1 | 5.07 | 9.38 | 15.6 | 24.71 | 9.57 | 15.22 | 22.53 | 36.46 |
| Example 2 | 4.84 | 14.14 | 22.37 | 33.48 | 10.7 | 16.16 | 24.41 | 38.75 |
| Example 3 | 3.95 | 10.99 | 21.36 | 33.51 | 10.57 | 16.47 | 25.72 | 38.95 |
| Comparative Example 1 | 1.88 | 9.69 | 35.72 | 162.25 | 1.39 | 16.86 | 51.37 | 111.86 |
| Comparative Example 2 | 2.55 | 13.26 | 78.42 | 341.85 | 3.15 | 30.59 | 95.25 | 204.8 |
| Comparative Example 3 | 0.78 | 2.72 | 283.43 | 374.35 | 5.86 | 37.17 | 117.15 | 296.79 |
| Comparative Example 7 | 0.21 | 4.23 | 150.54 | 490.34 | 2.32 | 5.67 | 90.1 | 100.12 |
| Comparative Example 8 | 10.23 | 23.32 | 200.12 | 600.01 | 15 | 26.32 | 45.65 | 56.87 |
| Comparative Example 9 | 0.34 | 5.34 | 89.09 | 220.32 | 1.01 | 3.23 | 60.54 | 66.43 |
| Comparative Example 10 | 11.24 | 15.65 | 156.67 | 188.89 | 20.21 | 43.65 | 100.07 | 199.03 |

From the data in Table 3, it can be seen that the particle sizes of the synthesized slurries and the particle sizes of the final ferric phosphate in Examples 1-3 are in a narrow range. During the drying and calcination stage, there is no significant aggregation of the final ferric phosphate particles during water evaporation. It may be attributed to the stable nucleation and growth during the synthesis process, with most particles growing on the basis of primary nucleation, resulting in good sphericity of particles, and thus, less tendency for aggregation during the drying and calcination. In contrast, in Comparative Examples 1-3, due to significant pH fluctuations during the synthesis process, nucleation and growth occur in an unstable state, resulting in uneven morphology of ferric phosphate particles and hard aggregations during drying and calcination. In Comparative Examples 7 and 9, excessive or insufficient stirring intensity leads to dispersion of primary nucleation particles and disruption of crystal structure, causing particles to disperse and aggregate in an unstable state, resulting in a wider range of particle size distribution. In Comparative Examples 8 and 10, insufficient stirring intensity prevents particles from achieving suspension, leading to easy aggregation of materials, uneven dispersion of particles, and a partially wider range of particle size.

The Fe:P ratio, tap density, and impurity elements of the ferric phosphate products obtained in Examples 1-3, Comparative Examples 1-3, and Comparative Examples 7-10 are shown in Table 4.

**Table 4**

| Group | Fe/P | Tap density(g/cm³) | K(ppm) | Mg(ppm) | Mn(ppm) | Zn(ppm) |
|---|---|---|---|---|---|---|
| Example 1 | 0.9645 | 1.34 | 54.75 | 14.68 | 16.27 | 0 |
| Example 2 | 0.9670 | 1.36 | 46.06 | 15.15 | 15.94 | 0.76 |
| Example 3 | 0.9683 | 1.40 | 52.51 | 18.41 | 16.61 | 5.27 |
| Comparative Example 1 | 0.9623 | 1.1 | 52.51 | 16.92 | 18.32 | 0.78 |
| Comparative Example 2 | 0.9678 | 0.99 | 60.33 | 52.56 | 61.44 | 21.05 |
| Comparative Example 3 | 0.9982 | 0.67 | 472.13 | 154.3 | 200.24 | 110.21 |
| Comparative Example 7 | 0.9710 | 1.23 | 52.11 | 30.09 | 28.88 | 3.00 |
| Comparative Example 8 | 0.986 | 0.87 | 54 | 100.21 | 150.43 | 43.89 |
| Comparative Example 9 | 0.9687 | 1.11 | 47.12 | 23.22 | 21.85 | 7.03 |
| Comparative Example 10 | 0.9643 | 0.99 | 38.98 | 38.21 | 36.54 | 10.1 |

From the data in Table 4, it can be observed that the Fe:P ratios in Examples 1-3 and Comparative Examples 1-2, 7, and 9-10 are relatively normal. However, in Comparative Examples 3 and 8, the Fe:P ratios are higher. In Comparative Example 3, this is due to the formation of a significant amount of iron hydroxide by-products when the iron salt solution is added to the phosphate solution. In Comparative Example 8, this is due to the inadequate stirring intensity during the nucleation process, which leads to the incomplete precipitation of trivalent iron with phosphate, resulting in the formation of iron hydroxide by-products. The lithium iron phosphate obtained in Examples 1-3 exhibits higher tap densities, primarily due to the narrow particle size distribution and the denser particles. There are significant differences in contents of impurity elements Mg, Mn, and Zn. In Comparative Examples 2-3, the decomposition of hydrogen peroxide and the higher pH during synthesis lead to the generation of many phosphate by-products. In Comparative Example 8, the relatively higher levels of Mg, Mn, and Zn are attributed to the inadequate stirring intensity during the oxidation and nucleation process, resulting in the formation of colloidal iron hydroxide by-products. The relatively excess phosphorus combines with impurities in the ferrous salt to form phosphate precipitates.

The performances of the lithium iron phosphate obtained in Examples 4-6, Comparative Examples 4-6, and Comparative Examples 11-14 are shown in Table 5.

**Table 5**

| Group | Powder compaction density(g/cm³) | 0.1C first charge cycle(mAh/g) | 0.1C first discharge cycle(mAh/g) | Efficiency(%) |
|---|---|---|---|---|
| Example 4 | 2.61 | 161 | 158 | 98.14 |
| Example 5 | 2.65 | 160 | 159 | 99.38 |
| Example 6 | 2.68 | 159 | 157.8 | 99.25 |
| Comparative Example 4 | 2.51 | 160 | 156 | 97.50 |
| Comparative Example 5 | 2.35 | 157 | 156 | 99.36 |
| Comparative Example 6 | 2.289 | 155.8 | 153.1 | 98.27 |
| Comparative Example 11 | 2.40 | 157.7 | 152 | 96.39 |
| Comparative Example 12 | 2.32 | 155.6 | 146.54 | 94.18 |
| Comparative Example 13 | 2.53 | 158.4 | 152.5 | 96.28 |
| Comparative Example 14 | 2.56 | 157.3 | 153.3 | 97.45 |

It can be seen from the performances of lithium iron phosphate in Table 5 that the lithium iron phosphate provided in Examples 4-6 has higher compaction densities and excellent charge and discharge performances. The compaction densities and charge and discharge performances of the lithium iron phosphate provided in the comparative examples are relatively poor. The reason for this difference is that the particles of the raw material ferric phosphate are uniform, dense, and have large tap densities, which are beneficial to the preparation of lithium iron phosphate with high compaction densities and excellent electrical performances.

## Claims

1. A preparation method of high tap density ferric phosphate, comprising:
(a) feeding a ferrous sulfate solution and a phosphate solution comprising hydrogen peroxide simultaneously into a first reactor for mixing and reacting to obtain nucleated ferric phosphate;
wherein a molar ratio of iron element to phosphorus element during feeding is 1:1, and a stirring speed during mixing is 500r/min-600r/min; and
(b) discharging the nucleated ferric phosphate to a second reactor for growth to obtain amorphous ferric phosphate slurry, and post-processing the amorphous ferric phosphate slurry to obtain the high tap density ferric phosphate;
wherein a stirring speed during the growth is 120r/min-150r/min, and a volume ratio of the first reactor to the second reactor is 0.75%-1.5%.

2. The preparation method according to claim 1, wherein a concentration of ferrous ions in the ferrous sulfate solution is 1mol/L-1.2mol/L, and pH of the ferrous sulfate solution is 2.5-3.5;
preferably, a concentration of phosphorus element in the phosphate solution is 1.8mol/L-2mol/L;
preferably, a concentration of hydrogen peroxide in the phosphate solution is 1.1mol/L-1.2mol/L.

3. The preparation method according to claim 1, wherein raw materials for preparing the ferrous sulfate solution comprise a by-product of titanium dioxide.

4. The preparation method according to any one of claims 1-3, wherein in step (a), a feeding speed of the ferrous sulfate solution is 6L/min-8L/min;
preferably, a feeding speed of the phosphate solution is 3L/min-4L/min.

5. The preparation method according to any one of claims 1-3, wherein, after the ferrous sulfate solution and the phosphate solution comprising hydrogen peroxide are started to be fed into the first reactor for 5 seconds - 10 seconds, materials are started to be discharged to the second reactor from the first reactor;
preferably, a volume of the first reactor is 3L;
preferably, a volume of the second reactor is 300L.

6. The preparation method according to any one of claims 1-3, wherein in step (b), a discharge speed of the nucleated ferric phosphate is 9L/min-12L/min.

7. The preparation method according to any one of claims 1-3, wherein in step (b), the post-processing comprises following steps:
first washing, slurry forming, aging, second washing, and calcining the amorphous ferric phosphate slurry to obtain the high tap density ferric phosphate.

8. High tap density ferric phosphate, which is prepared by the preparation method according to any one of claims 1-7.

9. The high tap density ferric phosphate according to claim 8, wherein the tap density of the ferric phosphate is 1.25-1.45g/cm³.

10. Lithium iron phosphate mainly prepared from the high tap density ferric phosphate according to claim 8 or 9 and lithium carbonate.
